# EUROPEAN PATENT SPECIFICATION

(11) **EP 1 027 551 B1**
(45) Date of publication and mention of the grant of the patent: **19.02.2003**
(21) Application number: 98954843.3
(22) Date of filing: 06.11.1998
(51) Int. Cl.: F16L 21/04

(54) **SEALING RING AND PIPE COUPLING EMBODIED THEREWITH**
DICHTUNGSRING UND ROHRKUPPLUNG MIT SOLCHEM DICHTUNGSRING
BAGUE D'ETANCHEITE ET RACCORD DE TUYAU DANS LEQUEL EST INCORPOREE CETTE BAGUE

(30) Priority: 06.11.1997 NL 1007465
(43) Date of publication of application: 16.08.2000
(73) Proprietor: AVK Rewag B.V., 7324 AL Apeldoorn (NL)
(72) Inventor: NIJHOF, Ferdinand, Jan, NL-5401 BN Uden (NL); VAN COILLIE, André, Joseph, Sylvère, B-1480 Clabecq (BE)
(74) Representative: Bartelds, Erik
(86) International application number: NL9800644
(87) International publication number: WO99024751

(56) References cited:
- EP-A- 0 608 798
- DE-C- 957 704
- FR-A- 1 155 171
- GB-A- 2 167 145
- GB-A- 2 310 698

## Description

The invention relates to a sealing ring comprising a body which at least in use is continuous and of which at least the surface is formed by an elastic material and which is easily deformable in peripheral direction but practically not so in cross-sectional direction.

Such a sealing ring is known.

The known sealing ring comprises a core formed by a spiral spring bent to form a ring and a sleeve of an elastic material such as rubber enclosing the core.

The known sealing ring is well compressible in peripheral direction because during such a compression the bent spiral spring is in fact compressed whereby the interspace between the windings of the spring is made smaller. In practice however, the sleeve of elastomer material cannot adequately follow this compression, whereby this material is very severely deformed. This can result in tearing of the material, whereby the sealing action thereof is lost. The degree of compression in peripheral direction is thus ultimately bounded by the material of the sleeve.

A sealing ring according to the preamble of claim 1 is known from EP-A-608 798.

The invention now has for its object to provide an improved sealing ring of the above described type.

According to the invention this is achieved with a sealing ring according to claim 1. Due to this local weakening, which can be compressed under a pressure load, a space is in fact formed in which the elastic material can collect when the sealing ring is compressed in peripheral direction. Fold forming, which can ultimately result in tears in the elastic material, is hereby avoided.

In practice the sealing ring preferably comprises a number of weakenings which are spaced apart in peripheral direction and which run substantially transversely of the peripheral direction. When the ring is compressed space is hereby created along the whole periphery thereof in which the elastic material can be received, whereby the ring can be reduced in size uniformly in peripheral direction.

The weakenings are preferably also arranged spaced apart in cross-sectional direction. The deformation of the ring during compression thereof is hereby distributed even better.

The ring will generally have a radially inward directed side, a radially outward directed side and top and bottom sides extending between these inner and outer sides. In preference the weakenings are herein arranged in the top and bottom sides since the inner and outer sides will generally have to come into sealing contact with surfaces of objects which have to be mutually connected. For a uniform deformation of the ring the weakenings are preferably arranged alternatingly in the top and the bottom side. An undulating configuration of the elastic material is in fact thus obtained, as seen in peripheral direction, with the weakenings between the undulations. This configuration allows of easy compression.

The weakenings can in principle be formed by inclusions of a material which can be deformed in peripheral direction considerably more easily than the elastic material of the ring. An easily manufactured ring is however obtained when at least some of the weakenings are formed by one or more recesses.

In order to enable use of the ring not only as sealing ring but also as fixing means, it preferably has at least one clamping member which is connected to the ring on the inner side and which is manufactured from a harder material than the ring.

The diameter of the ring can herein be varied over a wide range when it is provided with a plurality of clamping members arranged spaced apart in peripheral direction. Each clamping member can herein at least partially take the form of a circle segment.

The sealing ring is simple to manufacture if the or each clamping member is embedded in the elastic material of the ring. In preference the or each clamping member herein comprises at least one radially inward directed surface with high friction in order to increase the clamping force of the ring.

The invention also relates to a pipe coupling wherein this sealing ring can be applied. Such a pipe coupling can be provided with a housing having on at least one side an opening for receiving a pipe, at least one sealing ring of the above described type for arranging round the pipe and means connected to the housing for pressing the sealing ring.

The housing is preferably substantially tubular and provided on both sides with openings for receiving two pipes for mutual connection.

The invention is now elucidated on the basis of an embodiment, wherein reference is made to the annexed drawing, in which:

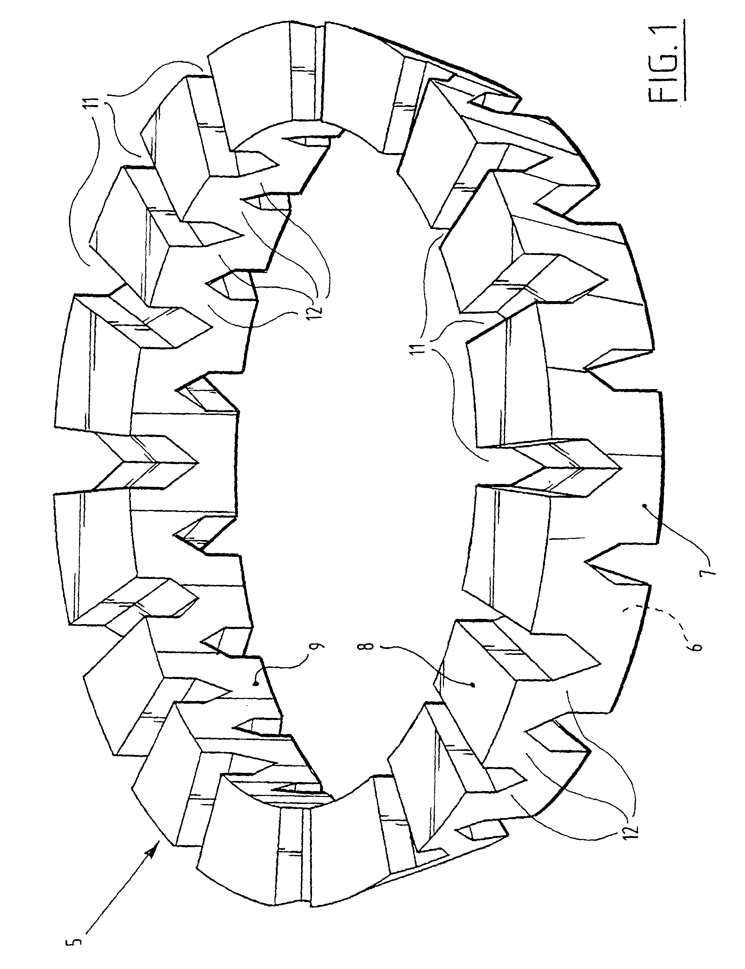

figure 1 shows a perspective view of a sealing ring according to a first embodiment of the invention,
figure 2 shows a longitudinal section through a pipe coupling in which the sealing ring of figure 1 is applied,
figures 3a and 3b show a detail of the sealing ring and the pipe coupling in respectively the released and tensioned state,
figure 4 is a perspective detail view of a second embodiment of the ring, and
figures 5 and 6 show cross-sections of the ring along the lines V-V and VI-VI.

For coupling of underground and above-ground pressure conduits and pressure-free conduits, wherein no use is made of rigid joints such as welds, fittings or pressure clips or flange connections, removable couplings can be used into which the conduit for connecting can be inserted on one side or two sides of the coupling. The seal between conduit and coupling is effected by pressing a sealing mass, for instance a rubber cord, between the coupling and the conduit.

In order to avoid a special coupling having to be made for each conduit diameter, which would result in a large stock and therefore high cost, the couplings and the sealing rings to be used thereby are designed to be able to accommodate a number of very varied pipe diameters. To enable accommodation of such a diversity of pipe diameters and still ensure a good sealing, use is made of sealing rings which are very easily deformable in peripheral direction but hardly so in cross-sectional direction.

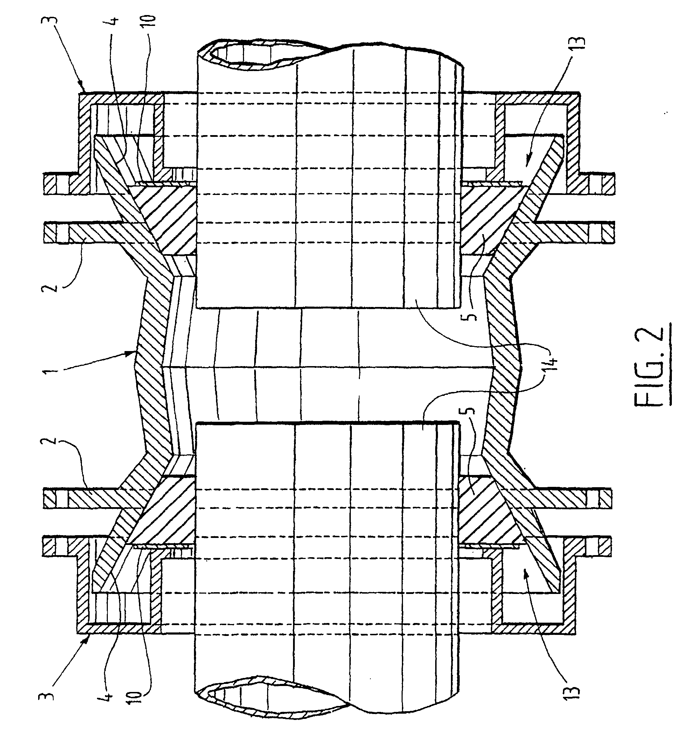

A coupling 1 (figure 2) comprises a cast-iron housing 1 which takes a tubular or practically cylindrical form with an opening 13 on either side for receiving a conduit 14. Housing 1 is further provided on either side with one or more flanges 2 with which a pressure ring 3 can be tightened by means of at least three bolts. The inner walls 4 of housing 1 take a conical form on both sides and enclose an acute angle with the longitudinal axis of the coupling which in the shown embodiment amounts to about 30° to 40°, depending on the desired diameter range. In the conical outer ends of coupling housing 1 are arranged sealing rings 5 through which conduits 14 can be placed. When pressure ring 3 is tightened, these sealing rings 5 are displaced in lengthwise direction of coupling 1 and herein pressed very closely together as a result of the conical inner wall 4.

Each sealing ring 5 is formed by a continuous body with an bottom side 6, outer side 7, top side 8 and an inner side 9. Weakenings, in the shown embodiment recesses 11, are arranged in the body which are spaced apart in both peripheral and cross-sectional direction of ring 5. In the shown embodiment recesses 11 are arranged in top side 8 and bottom side 6 of ring 5 and are slightly offset in each case whereby the ring, seen in peripheral direction, displays an undulating progression and gives the appearance of being assembled from a large number of mutually connected Y-shaped parts 12. As a consequence of the presence of recesses 11 the ring 5 can be compressed easily in peripheral direction since the material of the ring can, as it were, occupy the spaces left free by recesses 11. Along the edges of the recesses tensile forces are moreover generated in the material, which the material, which is after all elastic, can absorb relatively easily. There is therefore no danger of tearing as in the case where the elastic material is compressed. In the shown embodiment relatively stiff plates 10 are also vulcanized onto the top side 8 of ring 5 between recesses 11, whereby the pressure of pressure ring 3 is distributed uniformly over rubber ring 5.

Instead of the shown recesses 11, the weakenings could also be formed in other manner, for instance by inclusions of a material which at least in peripheral direction is considerably easier to deform than the elastic material of ring 5 itself. If ring 5 were then compressed in order to reduce the periphery thereof in size, these inclusions would then be compressed by the surrounding stiffer material whereby space would again be created for the material of ring 5 itself.

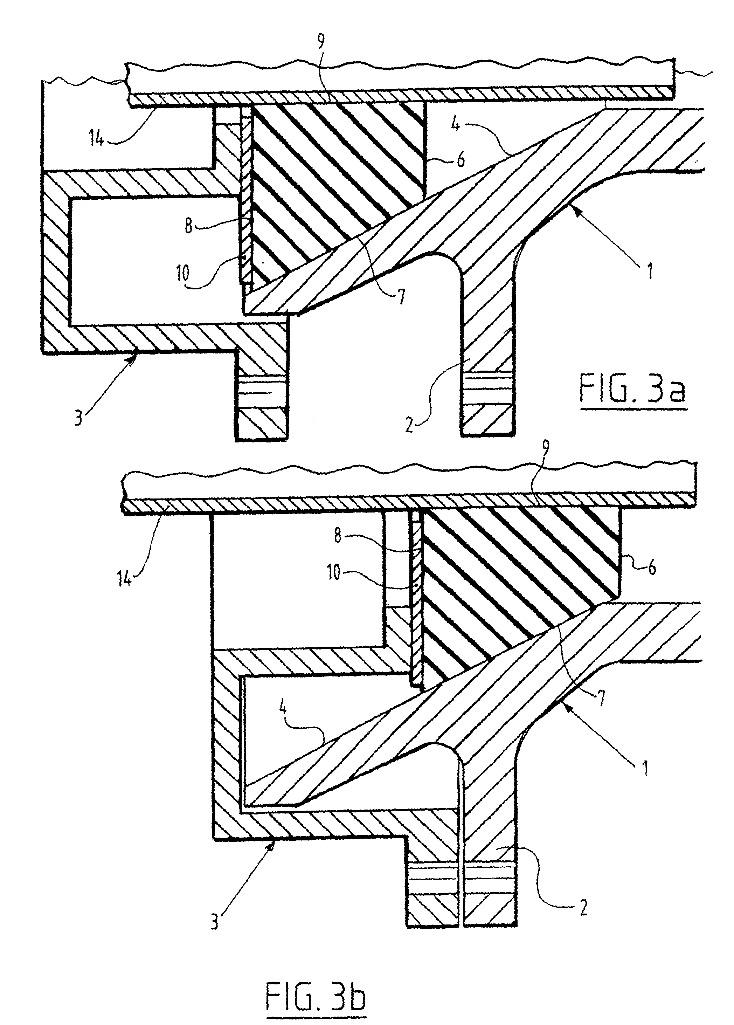

When a conduit of maximum diameter is inserted into the coupling (figure 3a), the inner side 9 of sealing ring 5 already makes contact with the periphery 18 of conduit 14 without pressure ring 3 having to be tensioned. However, if conduit 14 is smaller than the maximum size to be accommodated by coupling 1 but larger than the minimum size, it is accommodated sealingly in the coupling in the following manner.

By tightening pressure ring 3 using the bolts and flange 2 a pressure force is exerted on the top side 8 of sealing ring 5 which is thereby displaced along the conical wall 4 of coupling 1 towards the middle of the coupling and is hereby compelled to assume a smaller periphery and diameter. This is easily possible as a consequence of the special form of sealing ring 5 with the recesses 11 in spaced apart arrangement. When the ring is pressed, the Y-shaped legs 12 of the ring will bend toward each other, whereby the periphery of ring 5 decreases very considerably without a great force being necessary for this purpose. When pressure ring 3 is screwed even tighter, sealing ring 5 is compressed since the bottom side 6 of sealing ring 5 has completely filled the space between conduit 14 and wall 4 of the coupling and cannot be displaced further in axial direction. Sealing ring 5 is hereby pressed along its full height against wall 18 of conduit 14 on one side and against conical inner wall 4 of coupling 1 on the other side (figure 3b).

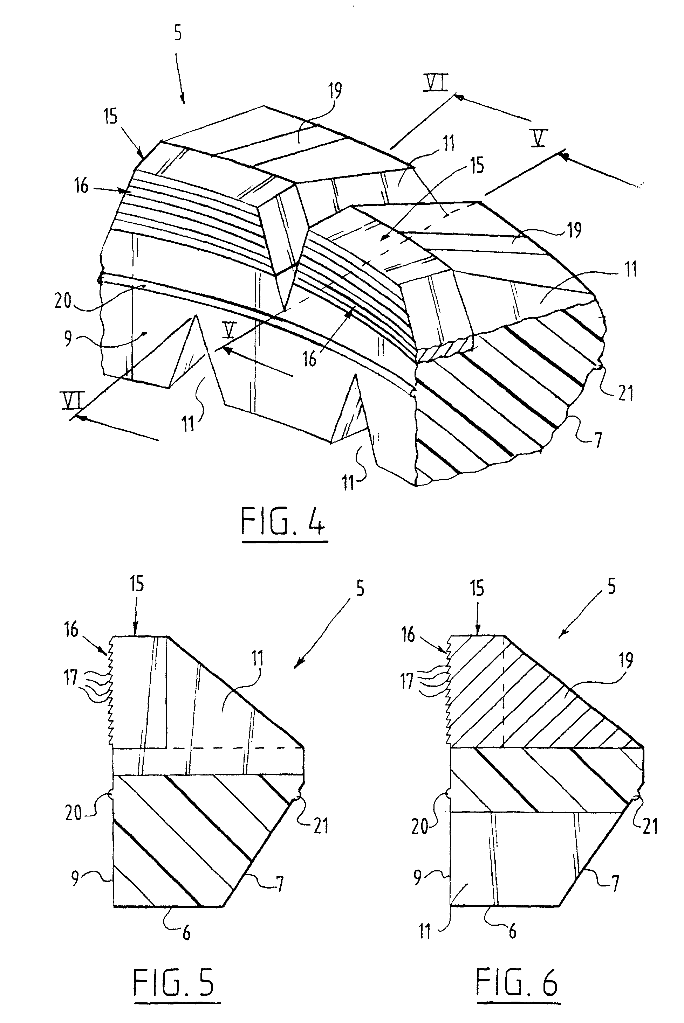

In order to make ring 5 suitable not only to function as sealing ring but also to absorb and transmit tensile and pressure forces in conduit 14, an alternative embodiment thereof is provided with a number of clamping members 15 arranged spaced apart on the inner side (figure 4). These clamping members 15, which are manufactured from a material which is considerably harder than the material of ring 5 itself, for instance steel, are embedded in the material of ring 5 and have an inward facing, slightly curved or circle segment-shaped surface 16 which is provided with means for increasing the friction thereof. In the shown embodiment this is achieved with a large number of milled edges 17. The clamping members extend in radial direction as far as the outer side of ring 5. In order to form a sufficient contact surface with the surrounding material, clamping members 15 herein each have a T-shaped form, wherein the actual clamping face 16 is formed by the "lying" leg of the T and the "standing" leg 19 protrudes in radial direction.

In this second embodiment of ring 5 sealing edges 20 respectively 21 are otherwise arranged running along the inner surface 9 and outer surface 7. Owing to these edges 20, 21 sealing takes place in one line instead of over a whole surface. As a result of the smaller sealing surface the pressure is greater at an equal pressure force, whereby an even better seal is realized.

In this way a sealing ring is obtained having a closed cross-sectional shape, which as a consequence of the special configuration thereof is still easily deformable in peripheral direction, and thus forms a very good seal when exerting a relatively small pressure force. This seal is also very good because the pressure forces are introduced into the ring in a uniform manner, and the compression thereof thus also takes place uniformly and without "undulation". Furthermore, the sealing ring may be produced in a simple manner and at low cost, since the actual sealing body is integrally formed.

## Claims

1. Sealing ring (5) comprising a body which at least in use is continuous and of which at least the surface is formed by an elastic material and which is easily deformable in peripheral direction but practically not so in cross-sectional direction, the ring (5) having a radially inward directed side (9) and a radially outward directed side (7), **characterized by** at least one weakening (11) running from the radially inward directed side (9) to the radially outward directed side (7) in at least the elastic material.

2. Sealing ring (5) as claimed in claim 1, **characterized in that** a number of weakenings (11) spaced apart in peripheral direction are arranged in the elastic material which run substantially in radial direction.

3. Sealing ring (5) as claimed in claim 2, **characterized in that** the weakenings (11) are arranged spaced apart in the body in cross-sectional direction.

4. Sealing ring (5) as claimed in claim 2 or 3, **characterized in that** the ring (5) has top and bottom sides (8,6) extending between the inner and outer sides (9,7), and the weakenings (11) are arranged in the top and bottom sides (8,6).

5. Sealing ring (5) as claimed in claim 4, **characterized in that** the weakenings (11) are arranged alternatingly in the top and bottom side (8,6).

6. Sealing ring (5) as claimed in any of the preceding claims, **characterized in that** at least some of the weakenings (11) are formed by one or more recesses.

7. Sealing ring (5) as claimed in any of the preceding claims, **characterized by** at least one clamping member (15) which is connected to the ring (5) on the inner side (9) and which is manufactured from a harder material than the ring (5).

8. Sealing ring (5) as claimed in claim 7, **characterized by** a plurality of clamping members (15) arranged spaced apart in peripheral direction.

9. Sealing ring (5) as claimed in claim 8, **characterized in that** each clamping member (15) at least partially takes the form of a circle segment.

10. Sealing ring (5) as claimed in any of the claims 7-9, **characterized in that** the or each clamping member (15) is embedded in the elastic material of the ring (5).

11. Sealing ring (5) as claimed in any of the claims 7-10, **characterized in that** the or each clamping member (15) comprises at least one radially inward directed surface (16) with high friction.

12. Sealing ring (5) as claimed in any of the preceding claims, **characterized by** a closed cross-sectional shape.

13. Sealing ring (5) as claimed in any of the preceding claims, **characterized in that** at least the ring body is integrally formed.

14. Pipe coupling provided with a housing (1) having on at least one side an opening (13) for receiving a pipe (14), at least one sealing ring (5) as claimed in any of the preceding claims for arranging round the pipe (14) and means (2,3) connected to the housing (1) for pressing the sealing ring (5).

15. Pipe coupling as claimed in claim 14, **characterized in that** the housing (1) is substantially tubular and provided on both sides with openings (13) for receiving two pipes (14) for mutual connection.

## Patentansprüche

1. Dichtring (5), mit einem Körper, der zumindest bei Benutzung durchgehend ist und bei dem mindestens die Oberfläche aus einem elastischen Material geformt ist und der sich leicht in Umfangsrichtung, aber so gut wie nicht in Querschnittsrichtung, verformen lässt und wobei der Ring (5) eine radial nach innen gerichtete Seite (9) und eine radial nach außen gerichtete Seite (7) aufweist,
**dadurch gekennzeichnet,**
**dass** mindestens eine Abschwächung ausgehend von der radial nach innen gerichteten Seite (9) zur radial nach außen gerichteten Seite (7) zumindest im elastischen Material verläuft.

2. Dichtring (5) nach Anspruch 1,
**dadurch gekennzeichnet,**
**dass** eine Anzahl von Abschwächungen (11) einzeln getrennt voneinander in Umfangsrichtung im elastischen Material angeordnet ist, die im Wesentlichen in Querrichtung verlaufen.

3. Dichtring (5) nach Anspruch 2,
**dadurch gekennzeichnet,**
**dass** die Abschwächungen (11) in Querschnittsrichtung einzeln getrennt voneinander im Körper angeordnet sind.

4. Dichtring (5) nach Anspruch 2 oder 3,
**dadurch gekennzeichnet,**
**dass** der Ring (5) Ober- und Unterseiten (8,6) besitzt, die sich zwischen der Innen- und Außenseite (8,7) erstrecken, und die Abschwächungen (11) an der Ober- und Unterseite (8,6) angeordnet sind.

5. Dichtring (5) nach Anspruch 4,
**dadurch gekennzeichnet,**
**dass** die Abschwächungen abwechselnd an der Ober- und Unterseite (8,6) angeordnet sind.

6. Dichtring (5) nach einem der vorherigen Ansprüche,
**dadurch gekennzeichnet,**
**dass** mindestens einige der Abschwächungen (11) von einer oder mehreren Aussparungen gebildet werden.

7. Dichtring (5) nach einem der vorherigen Ansprüche,
**gekennzeichnet durch**
mindestens ein Klemmelement(15), das mit dem Ring (5) an der Innenseite (9) verbunden ist und das aus einem härteren Material als dem des Ringes (5) hergestellt ist.

8. Dichtring (5) nach Anspruch 7,
**dadurch gekennzeichnet,**
**dass** eine Vielzahl von Klemmelementen (15) einzeln getrennt voneinander in Umfangsrichtung angeordnet sind.

9. Dichtring (5) nach Anspruch 8,
**dadurch gekennzeichnet,**
**dass** jedes Klemmelement(15) zumindest teilweise die Gestalt eines Kreisabschnittes besitzt.

10. Dichtring (5) nach einem der Ansprüche 7-9,
**dadurch gekennzeichnet,**
**dass** das Klemmelement oder jedes Klemmelement (15) im elastischen Material des Ringes (5) eingeschlossen sind.

11. Dichtring (5) nach einem der Ansprüche 7-10,
**dadurch gekennzeichnet,**
**dass** das Klemmelement oder jedes Klemmelement (15) mindestens eine radial nach innen gerichtete Oberfläche (16) mit großer Reibung besitzen.

12. Dichtring (5) nach einem der vorherigen Ansprüche,
**gekennzeichnet durch**
eine geschlossene Querschnittsform.

13. Dichtring (5) nach einem der vorherigen Ansprüche,
**dadurch gekennzeichnet,**
**dass** zumindest der Ringkörper einstückig geformt ist.

14. Muffe mit einem Gehäuse (1), das auf mindestens einer Seite eine Öffnung besitzt, um ein Rohr (14) aufzunehmen, mit mindestens einem Dichtring nach einem der vorherigen Ansprüche, der um das Rohr (14) angeordnet werden kann, und mit Mitteln (2,3), die mit dem Gehäuse (1) verbunden sind, um den Dichtring (5) zusammenzudrücken.

15. Muffe nach Anspruch 14,
**dadurch gekennzeichnet,**
**dass** das Gehäuse (1) im Wesentlichen rohrförmig ist und an beiden Seiten mit Öffnungen (13) versehen ist, um zwei Rohre (14) für eine gegenseitige Verbindung aufzunehmen.

## Revendications

1. Bague d'étanchéité (5) comprenant un corps qui est continu au moins en utilisation et dont au moins la surface est formée par une matière élastique et qui est facilement déformable dans la direction périphérique mais pratiquement pas dans la direction transversale, la bague (5) comportant une face (9) dirigée radialement vers l'intérieur et une face (7) dirigée radialement vers l'extérieur, **caractérisé par** au moins une zone de moindre résistance (11) s'étendant de la face (9) dirigée vers l'intérieur à la face (7) dirigée vers l'extérieur dans au moins la matière élastique.

2. Bague d'étanchéité (5) selon la revendication 1, **caractérisée en ce qu'**un certain nombre de zones de moindre résistance espacées les unes des autres dans la direction périphérique sont disposées dans la matière élastique qui s'étend sensiblement dans la direction radiale.

3. Bague d'étanchéité (5) selon la revendication 2, **caractérisée en ce que** les zones de moindre résistance (11) sont espacées les unes des autres dans le corps dans la direction transversale.

4. Bague d'étanchéité (5) selon la revendication 2 ou 3, **caractérisée en ce que** la bague (5) comporte des faces supérieure et inférieure (8, 6) s'étendant entre les faces intérieure et extérieure (9, 7), et les zones de moindre résistance (11) sont situées dans les faces supérieure et inférieure (8, 6).

5. Bague d'étanchéité selon la revendication 4, **caractérisée en ce que** les zones de moindre résistance (11) sont situées alternativement dans la face supérieure et dans la inférieure (8, 6).

6. Bague d'étanchéité (5) selon l'une quelconque des revendications précédentes, **caractérisée en ce que** au moins certaines des zones de moindre résistance (11) sont formées par un ou plusieurs évidements.

7. Bague d'étanchéité (5) selon l'une quelconque des revendications précédentes, **caractérisée par** au moins un élément de serrage (15) qui est relié à la bague (5) sur la face intérieure (9) et qui est fabriqué à partir d'une matière plus dure que celle de la bague (5).

8. Bague d'étanchéité (5) selon la revendication 7, **caractérisée par** une pluralité d'éléments de serrage (15) espacés les uns des autres dans la direction périphérique.

9. Bague d'étanchéité (5) selon la revendication 8, **caractérisée en ce que** chaque élément de serrage (15) a en partie la forme d'un segment de cercle.

10. Bague d'étanchéité (5) selon l'une quelconque des revendications 7 à 9, **caractérisée en ce que** l'élément de serrage, ou chaque élément de serrage, (15) est incorporé dans la matière élastique de la bague (5).

11. Bague d'étanchéité (5) selon l'une quelconque des revendications 7 à 10, **caractérisée en ce que** l'élément de serrage, ou chaque élément de serrage, (15) comprend au moins une surface dirigée radialement vers l'intérieur dont le coefficient de frottement est élevé.

12. Bague de serrage (5) selon l'une quelconque des revendications précédentes, **caractérisée par** une forme fermée en coupe transversale.

13. Bague de serrage (5) selon l'une quelconque des revendications précédentes, **caractérisée en ce que** au moins le corps de la bague est formée par venue de matière.

14. Raccord de tuyau doté d'un boîtier (1) comportant sur au moins une face une ouverture (13) destinée à recevoir un tuyau (14), au moins une bague d'étanchéité (5) selon l'une quelconque des revendications précédentes venant se placer autour du tuyau (14) et des moyens (2, 3) reliés au boîtier (1) en vue de comprimer la bague d'étanchéité (5).

15. Raccord de tuyau selon la revendication 14, **caractérisé en ce que** le boîtier (1) est sensiblement tubulaire et doté des deux côtés d'ouvertures (13) destinées à recevoir deux tuyaux (14) à raccorder l'un à l'autre.
